# EUROPEAN PATENT SPECIFICATION

(11) **EP 2 499 020 B1**
(45) Date of publication and mention of the grant of the patent: **21.08.2019**
(21) Application number: 10827736.9
(22) Date of filing: 09.11.2010
(51) Int. Cl.: B60N 2/26, B60N 2/28

(54) **CHILD SEAT WITH IMPACT PROTECTION**
KINDERSITZ MIT AUFPRALLSCHUTZ
SIÈGE POUR ENFANT OFFRANT UNE PROTECTION CONTRE LES CHOCS

(30) Priority: 09.11.2009 AU 2009905464; 18.02.2010 AU 2010900686
(43) Date of publication of application: 19.09.2012
(73) Proprietor: Britax Childcare Pty Ltd., Sunshine, VIC 3020 (AU)
(72) Inventor: LUMLEY, Mike, Sunshine VIC 3020 (AU); BOYLE, Stuart, Sunshine VIC 3020 (AU); MACIEJCZYK, Wieslaw, Sunshine VIC 3020 (AU)
(74) Representative: Bosch Jehle Patentanwaltsgesellschaft mbH
(86) International application number: PCT/AU2010/001495
(87) International publication number: WO 2011/054063

(56) References cited:
- WO-A1-2009/046247
- WO-A1-2009/046247
- WO-A2-2005/105515
- DE-A1-102008 002 822
- DE-A1-102008 002 822
- GB-A- 2 359 989
- US-A1- 2009 179 469
- US-B1- 6 273 509
- US-B1- 6 273 509
- US-B2- 6 485 101
- US-B2- 6 485 101

## Description

### FIELD OF THE INVENTION

The present invention relates to child safety seats or restraints for child passengers in vehicles.

### BACKGROUND OF THE INVENTION

As young children cannot be safely restrained in a vehicle by a standard seat belt, specialised safety seats or child restraints have been developed to protect a child ranging in age from that of a newborn to that of a toddler, in the event of an accident. A number of child restraints or safety seats have been developed which are designed to accommodate this wide range of ages in a single unit. Typically these seats can be configured in either the prone configuration suitable for a rearward facing installation or the forward facing upright configuration. In this manner, a single safety seat can be used for both a baby (prone configuration) and a large toddler (forward facing configuration) thereby saving on unnecessary expense.

However, the heads of very young children are particularly fragile and therefore vulnerable in the event of motor vehicle accidents (particularly vehicle side impacts) where:
1. vehicle body work (such as a door) is forced to encroach on the space occupied by the seat;
2. the seat may be thrown against the side of the vehicle during the impact, including the encroaching portions; and
3. unrestrained vehicle contents and other miscellaneous debris created in the accident are flung about inside of the vehicle.

Document US 6,485,101 B2 discloses an adjustable child safety seat including a back rest, a pair of side guards provided on opposing sides of the back rest for protecting side portions of an infant, and a pair of side head guards provided to be movable in an upward/downward direction and so as to be selectively detachable, inside the pair of side guards.

It is an object of the present invention therefore to provide a child safety seat or child restraint capable of accommodating occupants of varying age and size, whilst providing at least some degree of protection for the head of the child from the above identified hazards, or which at the least, is a useful alternative to known child safety seats.

Other objects and advantages of the present invention will become apparent from the following description, taken in connection with the accompanying drawings, wherein, by way of illustration and example, an embodiment of the present invention is disclosed.

### SUMMARY OF THE INVENTION

In a first aspect the present invention accordingly provides a child safety seat comprising a seat body with a base portion, a back portion, a headrest, the position of which can be adjusted up or down relative to the back portion, and an impact energy absorbing element depending from the headrest and directed outwardly from the headrest and away from a head of a seat occupant to absorb and/or redirect blows incident to or about at least the headrest of the seat.

In one form, the seat comprises its own harness for restraining the occupant. In an alternative, it is a seat without its own harness, such as a booster seat.

In one form, the headrest comprises a pair of side edges and a top edge, where an impact absorbing element forms a head guard on or along any one or more or all of these edges.

In one form, in conjunction with the outwardly directed impact energy absorbing element, a cushioning element is directed toward the head of a seat occupant. That is, the cushioning element is located between the head of the occupant and the headrest (or seat portion).

In one form, the headrest comprises a back portion adapted to extend behind an occupants head, and a side wing extending forwardly from said back portion on at least one side thereof, where an impact absorbing element is secured to an outer side of one or each of the wings. In one form, a cushioning element is secured to the inside of each of the wings.

In one form, there is a side wing side wing extending forwardly from said back portion on both sides thereof, where each of these wings has at least one impact absorbing element secured to an outer side thereof. In this way the headrest bounds and protects the occupants head on both sides.

In one form each impact absorbing element is adapted to absorb impact by means of any one or more of plastically or elastically deforming, cushioning, crushing, rupturing, deflating or bursting.

In one form each impact absorbing element comprises any one or more of a hollow and/or gas, liquid, gel or other energy absorbing material filled shell of deformable or cellular material.

In one form, the shell has thin wall of plastic material.

In one form, in an alternative, each impact energy absorbing element comprises padding material covered with a pliable covering material. In one form, the pliable covering material encapsulates the padding material.

In one form, the pliable covering material is a pliable plastic sheet material, and the padding material is a sponge like element.

In one form, there is at least one aperture in the pliable covering material, where this aperture permits at least the release of air from the impact energy absorbing element. In one form, there are a plurality of these holes in the pliable covering material.

In one form, the pliable covering material is a PVC bag, and the padding material is either of an open cell or closed foam material. In one form, the or each impact energy absorbing element is secured to the seat with an adhesive or adhesive material.

In a further aspect, the invention maybe said to reside in a child safety seat comprising a seat body with a base portion, a back portion, and an impact energy absorbing element adapted to absorb and/or redirect blows incident to or about at least a head supporting portion of the seat, where the height of the impact energy absorbing element above the base is adjustable.

In order to fully understand the invention, an exemplary embodiment will now be described. However, it will be realised that the scope of the invention is not to be limited to precise details of this embodiment and that variations apparent to a skilled person are to be deemed included within the scope of the invention.

### BRIEF DESCRIPTION OF THE DRAWINGS

For a better understanding of this disclosure it will now be described with respect to an exemplary embodiment which shall be described herein with the assistance of drawings wherein:
Figure 1 is a perspective view of a child safety seat having a headrest with impact absorbing elements depending therefrom;
Figure 2 is a perspective view of the headrest from the child safety seat in Figure 1, in isolation;
Figures 3 through 12 are cross-sectional views through various, alternative embodiments of impact absorbing elements;
Figures 13 through 15 illustrate a seat according to a further embodiment, where the headrest extends above the back portion of the seat, and is adjustable relative to the back portion;
Figures 16 through 18 illustrate a seat according to yet a further embodiment, where the headrest and at least a portion of the back portion are fixed relative to each other, and adjustable up and down together; and
Figure 19 is a cross-sectional view through a further, alternative embodiment of an impact absorbing element.

In the following description, like reference characters designate like or corresponding parts throughout the several views of the drawings.

### DETAILED DESCRIPTION OF AN EMBODIMENT OF THE INVENTION

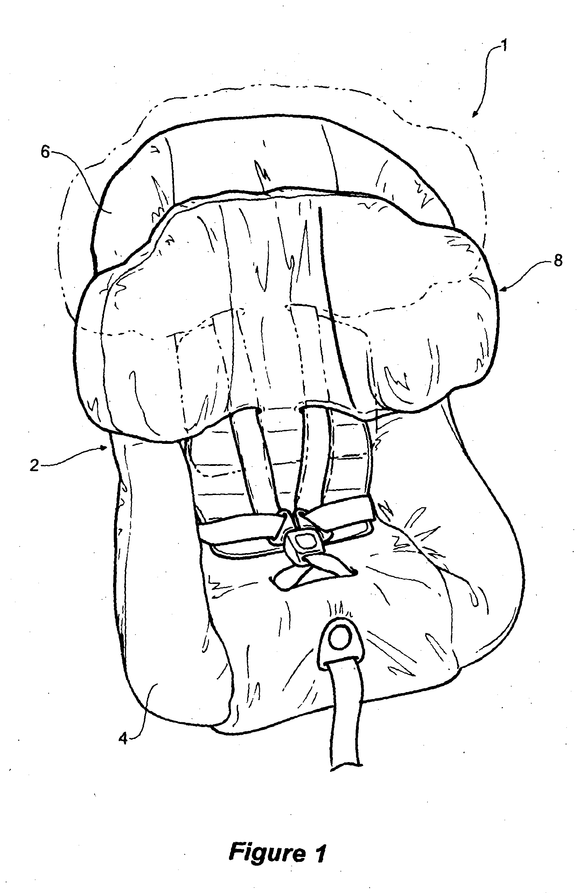

Referring now to Figure 1, where there is illustrated a child safety seat 1 for use with a seatbelt equipped vehicle seat by being positioned thereon and retained thereto using the vehicle's seat belts and a tether strap extending from the child safety seat 1 to a vehicle mounting point.

The child safety seat 1 comprises a seat body 2 with a base portion 4 and a back portion 6, and, in this embodiment, an adjustable headrest 8, the position of which can be adjusted relative to the back portion 6.

The position of the headrest 8 is adjusted by grasping the upper edge of this, tilting it forward relative to the back portion 6 of the body 2, and then sliding the headrest 8 up or down as required (usually up as the child grows) between upper and lower travel limits thereof.

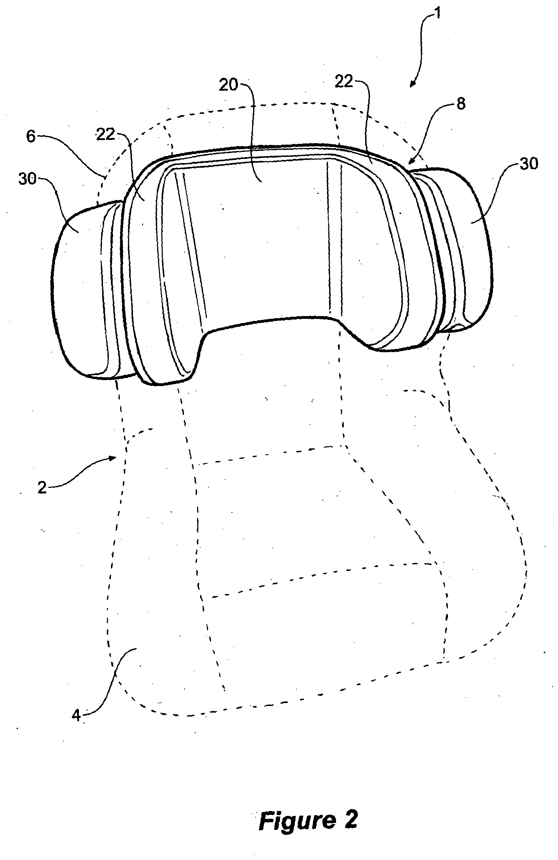

As can be seen in Figure 2, in the embodiment illustrated, the headrest 8 comprises a back portion 20, and a pair of side wings 22 extending outwardly and forward therefrom so as to extend on each side of a seat occupant's head.

Depending from each of these side wings 22 is an outwardly directed impact energy absorbing element 30, which is adapted to absorb and/or redirect blows incident to the wings 22 of the headrest 8 and thereby guard the head of the child occupying the seat 1. In this exemplary embodiment, the impact absorbing element 30 is a hollow, plastic blow moulded item that is secured to the headrest 8 via plastic clips.

As can be seen in Figure 1, each of the base 4, back 6 and headrest 8 portions of the seat 1, and the impact absorbing elements 30, are covered with a padded covering material to improve comfort of the seat 1 for both its occupant, and any vehicle occupants sitting adjacent to the seat 1. Potentially, the impact absorbing elements 30 could even be sewn (or otherwise incorporated) into the headrest covering itself.

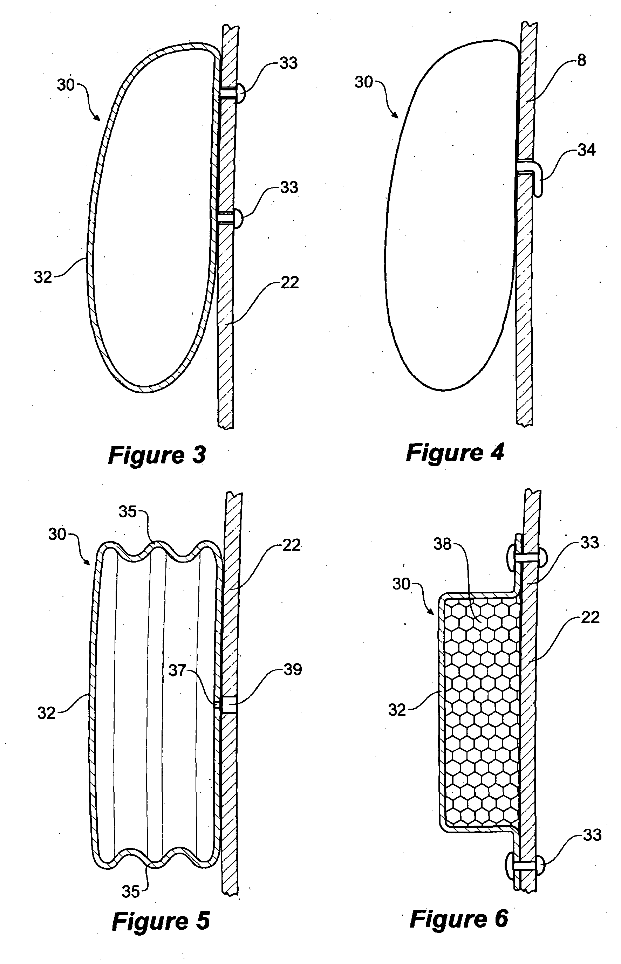

With reference now to Figure 3, where it can be seen that in one form, the impact absorbing elements 30 comprise a thin walled plastic shell 32 secured to the wings 22 of the headrest by way of clips or fasteners 33, or tabs 34 (as shown in Figure 4). The thin shell 32 of the impact absorbing elements 30 may be any one of hollow, partially or fully gas, liquid or gel filled, or contain or be filled with an energy absorbing material such as a foamed plastic or cellular material or the like. Further still, a combination of fillings may be employed.

Referring now to Figure 5, where it can be seen that in one form, the shell 32 of the impact absorbing elements 30 may be shaped so as to incorporate features that aid in impact absorption or redirection. In this case, shell 32 incorporates side walls 35 having the general shape of a sinusoidal wave form, whereupon at least some of the energy imparted by the collision of an incident object will cause the side walls 35 to be compressed with a 'concertina' affect. Moreover, there are aligned apertures 37 and 39 in both the shell 32 and wings 22 respectively, so that some of any air in the shell can be released in a controlled fashion as the elements 30 are compressed by the incident impact.

Referring now to Figure 6, where it can be seen that in one form, the impact absorbing elements 30 comprise a thin shell 32 filled with a material 38 having an energy absorbing honeycomb structure. The honeycomb structure may comprise extruded polypropylene or similar three-dimensional collapsible structure.

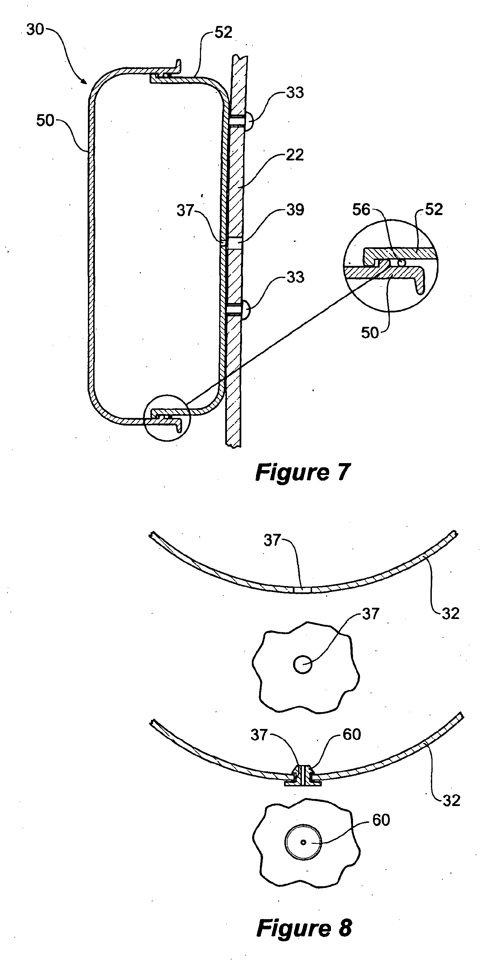

Referring now to Figure 7, where it can be seen that in one form, the shell 32 of the impact absorbing elements 30 may be formed from multiple (in this case 2) parts 50 and 52 which are adapted to move relative to one another and thereby absorb impact energy. Similar to the embodiment of Figure 5, there are aligned apertures in both one part 52 of the shell 32 and the wings 22 of the headrest 8, so that some of any air in the shell 32 can be released in a controlled fashion as the elements 30 are compressed by the incident impact. A seal comprising an o-ring 56 is retained between shell 30 parts 50 and 52 to restrict the escape of air at the point at which the portions 50 and 52 overlap.

With reference to Figure 8, where it is illustrated how it is that a valve 60 may be used to fill the aperture 37 in the shell 32. Such a valve may be used to seal the shell 32 or otherwise precisely control the release of fluid (particularly gas) or otherwise sacrificially rupture when the element 30 is compressed by impact.

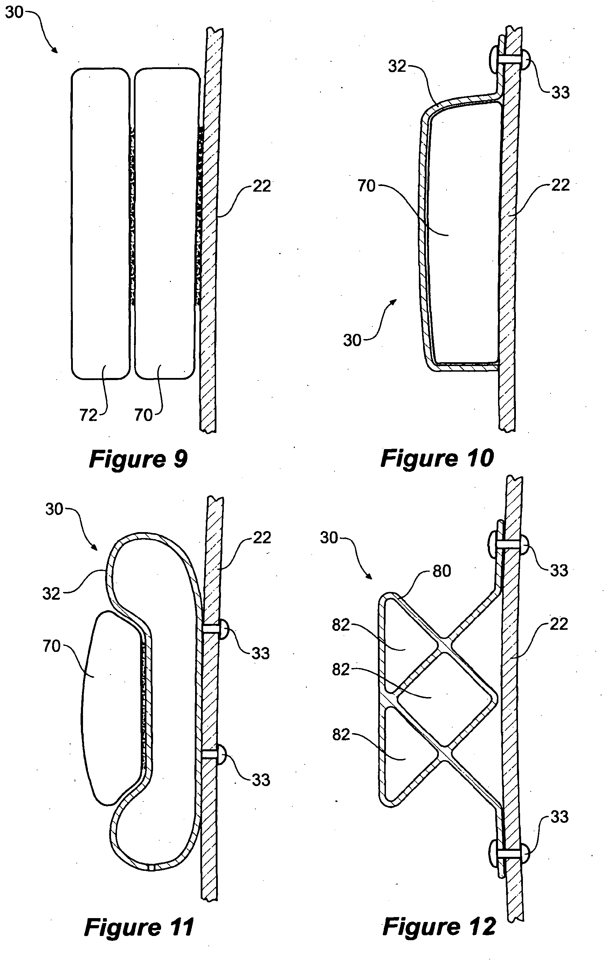

Referring now to Figures 9 and 11, where it can be seen that in one form, the impact absorbing elements 30 may comprise multiple (in this case 2) energy absorbing cushion elements 70 and 72 mounted one atop of the other (alternatively, they may be side by side). In this way, the properties of the two cushion elements 70 and 72 may be varied as required, so that either of these is more or less impact energy absorbing than the other for instance.

Referring now to Figure 10, where it can be seen that in one form, the impact absorbing elements 30 comprise a shell 32 that extends over a cushion element 70. In this way, the shell 32 may protect the cushion element 70 from damage, and the cushion element 70 may provide the majority of the impact energy absorption. Similarly in figure 11, the cushion element 70 may be adhered to the outer surface of the impact absorbing element 30, which may have a suitably shaped depression within which to locate the cushion element 70.

Referring now to Figure 12, where it can be seen that in one form, the impact absorbing elements 30 are integrally formed energy absorbing structures 80, defining, in this embodiment, a cross-section that is comprised of a plurality of triangular apertures 82. In use, the structure 80 would have a pre-determined length and is adapted to be crushed and thereby absorb incident impact energy.

By incorporating impact energy absorbing elements 30 in an adjustable headrest 8 of a child safety seat 1, there is provided a child safety seat 1 or child restraint capable of accommodating occupants of varying age and size while providing a guard for the occupant's head that is optimally positioned for them as they grow. Significantly, these impact energy absorbing elements 30 will reduce the amount of energy imparted to the headrest 8 of the seat 1 (and the occupants head in turn) by any one or more of:
1. vehicle body work forced to encroach on the space occupied by the seat (particularly in a side collision) or intrusion of other vehicles or intrusion of objects such as trees, poles or the like in side impacts;
2. the seat being thrown against the side of the vehicle, including any encroaching portions (particularly in a side collision); and
3. unrestrained vehicle contents and other miscellaneous debris created in the accident and flung about inside of the vehicle.

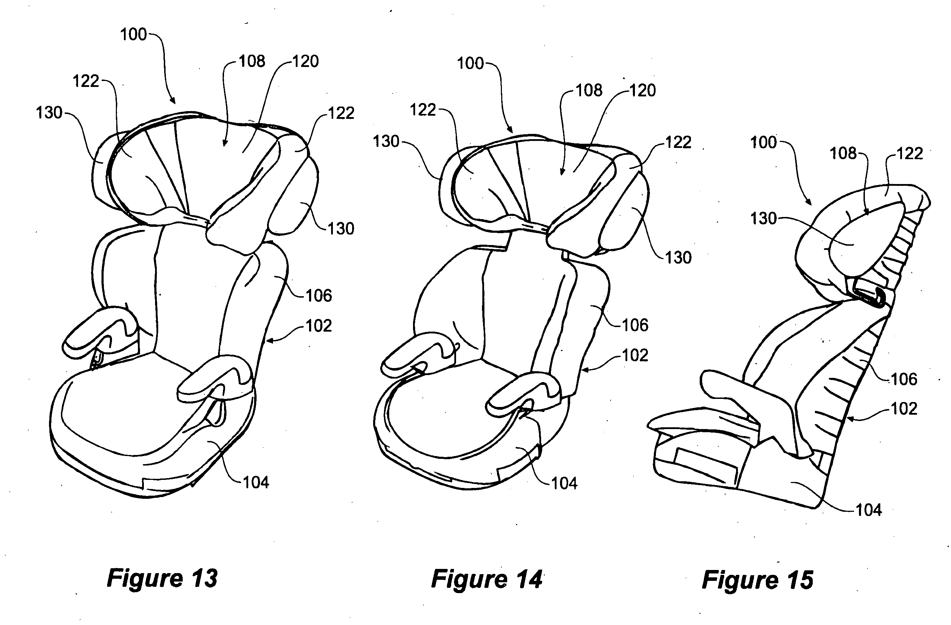

Referring now to Figures 13 through 15, where there is a child safety 100 seat (a booster seat in this case) comprising a seat body 102 with a base portion 104, a back portion 106, and an adjustable headrest 108, that extends above the back portion 106, and which can be adjusted relative to the back portion 106.

The headrest 108 comprises a back portion 120, and a pair of side wings 122 extending outwardly and forward therefrom so as to extend on each side of a seat occupant's head.

Depending from each of these side wings 122 is an outwardly directed impact absorbing element 130 adapted to absorb and/or redirect blows incident to the wings 122 of the headrest 108 and thereby guard the head of the child occupying the seat 100. In this exemplary embodiment, each impact absorbing element 130 is a hollow, plastic blow moulded item that is secured to the headrest 108 via plastic clips.

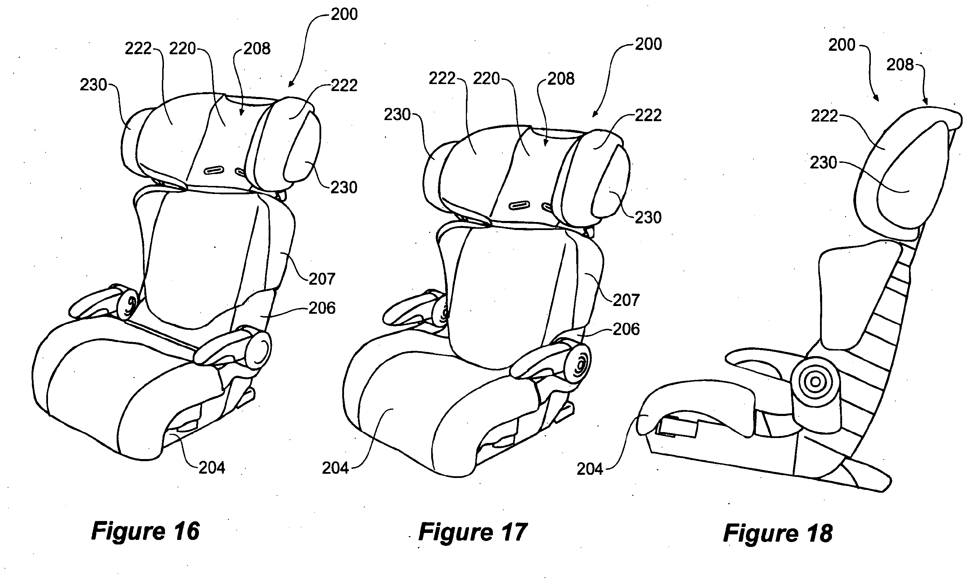

Referring now to Figures 16 through 18, where there is a child safety 200 seat (a booster seat in this case) comprising a seat body 202 with a base portion 204, a lower back portion 206, an upper back portion 207 and an headrest 208 that is fixed relative to upper back portion 207, and which extends above the back portion 207, where the position of the combined upper back portion 207 and headrest 208 together is adjustable relative to the lower back portion 206.

The headrest 208 comprises a back portion 220, and a pair of side wings 222 extending outwardly and forward therefrom so as to extend on each side of a seat occupant's head.

Depending from each of these side wings 222 is an outwardly directed impact absorbing element 230 adapted to absorb and/or redirect blows incident to the wings 222 of the headrest 208 and thereby guard the head of the child occupying the seat 200. In this exemplary embodiment, each impact absorbing element 230 is a hollow, plastic blow moulded item that is secured to the headrest 208 via plastic clips.

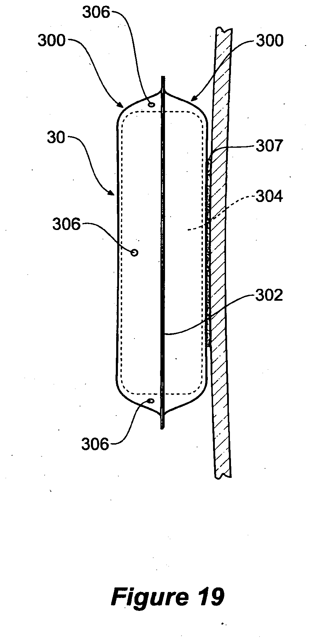

Referring now to Figure 19, where there is illustrated an impact absorbing element 30 comprised of two sheets of soft, pliable plastic material 300 secured together (such as by welding or use of adhesives) around matching perimeters 302 thereof so as to create a casing for a piece of expanded polystyrene foam 304 (or any suitable material having similar properties). The casing is then secured to an externally directed portion of a child safety seat such as any of 1, 100 or 200 using an adhesive or adhesive strip 307 or the like.

An advantage of open cell foam is that it gives the impact absorbing element 30 some shape and volume, and the open cell structure contains gas that can be expelled when impacted upon, so as to slow down the rate of compression of the impact absorbing element 30. This gas (air) may be released from the casing through one or more apertures 306 formed in sheets 300, or alternatively, by bursting a casing deficient of such release apertures 306.

In an alternative, a closed cell foam may be used to vary the energy absorbing properties of the impact absorbing element 30, as aside form its inherent properties, a closed cell foam may not contain as much gas for release when impacted upon.

In a further alternative, the foam element may be surrounded with additional air (i.e. the casing may be slightly pressurised), so as to provide a composite method for absorbing impact energy.

It will be understood that the term "comprise" and any of its derivatives (e.g. comprises, comprising) as used in this specification is to be taken to be inclusive of features to which it refers, and is not meant to exclude the presence of any additional features unless otherwise stated or implied.

Although an illustrative embodiment of the present invention has been described in the foregoing detailed description, it will be understood that the invention is not limited to the embodiment disclosed, but is capable of numerous rearrangements, modifications and substitutions as long as they fall within the scope of the invention as set forth and defined by the following claims.

## Claims

1. A child safety seat (1) comprising a seat body (2) comprising a base portion (4) and a back portion (6), and a headrest (8), the position of which can be adjusted up or down relative to the back portion (6), the child safety seat (1) being **characterised in that** it comprises an impact energy absorbing element (30) depending from the headrest (8) and directed outwardly from the headrest (8) and away from a head of a seat occupant to absorb and/or redirect blows incident to or about at least the headrest (8) of the seat (1).

2. The child safety seat (1) of claim 1, wherein the headrest (8) comprises a back portion (20) for extending behind a head of a seat occupant, and a side wing (22) extending forward from said back portion (20) and alongside the head of the seat occupant, wherein the impact absorbing element (30) depends from the side wing (22), is directed outwardly from the side wing (22), and away from the head of the seat occupant.

3. The child safety seat (1) of claim 2, wherein the headrest (8) comprises a pair of side wings (22), and an impact absorbing element (30) depending from each side wing (22), each impact absorbing element (30) being directed outwardly from its respective side wing (22) and away from a head of a seat occupant.

4. The child safety seat (1) as in any one of the preceding claims, wherein the headrest (8) extends above the back portion (6) of the seat (1).

5. The child safety seat (1) as in any one of claims 1 through 3, wherein the headrest (8) travels along the back portion (6) of the seat (1).

6. The child safety seat (1) as in any one of the preceding claims, wherein the headrest (8) is carried by a first back portion (207), and the first back portion (207) is adjustable up and down relative to a second back portion (206).

7. The child safety seat (1) as in any one of the preceding claims, wherein the headrest further comprises a cushioning means directed toward the head of a seat occupant so that the cushioning means is located between a head of a seat occupant and the impact energy absorbing element (30).

8. The child safety seat (1) as in claim 7, wherein a cushioning means is secured to an inner side of the or each of the side wings (22).

9. The child safety seat (1) as in any one of the preceding claims, wherein the or each impact absorbing element (30) is adapted to absorb impact by means of any one or more of plastically or elastically deforming, cushioning, crushing, rupturing, deflating or bursting.

10. The child safety seat (1) as in any one of the preceding claims, wherein the or each impact absorbing element (30) comprises any one or more of a hollow and/or gas, liquid, gel or other energy absorbing material (38) filled shell (32) of deformable or cellular material.

11. The child safety seat (1) as in claim 10, wherein the shell (32) has a thin wall of polymeric material.

12. The child safety seat (1) as in any one claims 1 through 9, wherein the or each impact energy absorbing element (30) comprises a padding material covered with a pliable covering material.

13. The child safety seat (1) as in claim 12, wherein the pliable covering material encapsulates the padding material.

14. The child safety seat (1) as in either of claims 12 or 13, wherein the pliable covering material is a pliable plastic sheet material, and the padding material is a sponge like element.

15. The child safety seat (1) as in any one of claims 12 through 14, wherein there is at least one aperture (37) in the pliable covering material, where this aperture (37) permits at least the release of air from the impact energy absorbing element.

16. The child safety seat (1) as in any one of claims 12 through 15, wherein the pliable covering material is a PVC bag, and the padding material is either of an open cell or closed cell foam material.

17. The child safety seat (1) as in any one of the preceding claims, wherein the seat (1) comprises its own harness for restraining the occupant.

18. The child safety seat (1) as in any one of claims 1 through 16, wherein the seat (1) is not equipped with its own harness, such as in the case of a booster seat.

## Patentansprüche

1. Kindersitz (1), der einen Sitzkörper (2) aufweist, welcher einen Basisabschnitt (4) und einen Rückenabschnitt (6) aufweist, sowie eine Kopfstütze (8), deren Position in Bezug zu dem Rückenabschnitt (6) höhenverstellbar ist, wobei der Kindersitz (1) **dadurch gekennzeichnet ist, dass** er ein Aufprallenergieabsorptionselement (30) aufweist, das von der Kopfstütze (8) herunterhängt und von der Kopfstütze (8) nach außen und vom Kopf eines Sitzinsassens weg gerichtet ist, um Stöße, die auf oder um wenigstens die Kopfstütze (8) des Sitzes (1) herum auftreffen, zu absorbieren und/oder umzuleiten.

2. Kindersitz (1) nach Anspruch 1, wobei die Kopfstütze (8) einen Rückabschnitt (20) aufweist, um sich hinter den Kopf eines Sitzinsassens zu erstrecken, und einen Seitenflügel (22), der sich von dem Rückabschnitt (20) nach vorne und entlang des Kopfs des Sitzinsassens erstreckt, wobei das Aufprallenergieabsorptionselement (30) von dem Seitenflügel (22) herunterhängt, von dem Seitenflügel (22) nach außen und vom Kopf des Sitzinsassens weg gerichtet ist.

3. Kindersitz (1) nach Anspruch 2, wobei die Kopfstütze (8) ein Paar von Seitenflügeln (22) und ein Aufprallabsorptionselement (30), das von jedem Seitenflügel (22) herunterhängt, aufweist, wobei jedes Aufprallabsorptionselement (30) von seinem jeweiligen Seitenflügel (22) nach außen und vom Kopf eines Sitzinsassens weg gerichtet ist.

4. Kindersitz (1) nach einem der vorhergehenden Ansprüche, wobei sich die Kopfstütze (8) über dem Rückenabschnitt (6) des Sitzes (1) erstreckt.

5. Kindersitz (1) nach einem der Ansprüche 1 bis 3, wobei die Kopfstütze (8) entlang des Rückenabschnitts (6) des Sitzes (1) wandert.

6. Kindersitz (1) nach einem der vorhergehenden Ansprüche, wobei die Kopfstütze (8) von einem ersten Rückenabschnitt (207) getragen wird, und der erste Rückenabschnitt (207) in Bezug zu einem zweiten Rückenabschnitt (206) höhenverstellbar ist.

7. Kindersitz (1) nach einem der vorhergehenden Ansprüche, wobei die Kopfstütze des Weiteren ein Dämpfungsmittel aufweist, das in Richtung des Kopfs eines Sitzinsassens gerichtet ist, so dass das Dämpfungsmittel zwischen dem Kopf eines Sitzinsassens und dem Aufprallenergieabsorptionselement (30) angeordnet ist.

8. Kindersitz (1) nach Anspruch 7, wobei ein Dämpfungsmittel an einer Innenseite des oder jedes der Seitenflügel (22) befestigt ist.

9. Kindersitz (1) nach einem der vorhergehenden Ansprüche, wobei das oder jedes Aufprallabsorptionselement (30) dazu ausgelegt ist, Aufprall mittels eines oder mehrerer zu absorbieren von plastischer oder elastischer Verformung, Dämpfung, Quetschen, Reißen, Entleeren oder Bersten.

10. Kindersitz (1) nach einem der vorhergehenden Ansprüche, wobei das oder jedes Aufprallabsorptionselement (30) eines oder mehrere aufweist von einer hohlen und/oder mit Gas, Flüssigkeit, Gel oder einem anderen energieabsorbierenden Material (38) gefüllten Schale (32) aus verformbarem oder zellulärem Material.

11. Kindersitz (1) nach Anspruch 10, wobei die Schale (32) eine dünne Wand aus polymerem Material hat.

12. Kindersitz (1) nach einem der Ansprüche 1 bis 9, wobei das oder jedes Aufprallenergieabsorptionselement (30) ein Polstermaterial aufweist, das mit einem nachgiebigen Abdeckmaterial bedeckt ist.

13. Kindersitz (1) nach Anspruch 12, wobei das nachgiebige Abdeckmaterial das Polstermaterial einkapselt.

14. Kindersitz (1) nach einem der Ansprüche 12 oder 13, wobei das nachgiebige Abdeckmaterial ein nachgiebiges Kunststofffolienmaterial ist und das Polstermaterial ein schwammartiges Element ist.

15. Kindersitz (1) nach einem der Ansprüche 12 bis 14, wobei in dem nachgiebigen Abdeckmaterial wenigstens eine Öffnung (37) vorliegt, wobei diese Öffnung (37) wenigstens die Freigabe von Luft aus dem Aufprallenergieabsorptionselement ermöglicht.

16. Kindersitz (1) nach einem der Ansprüche 12 bis 15, wobei das nachgiebige Abdeckmaterial ein PVC-Beutel ist und das Polstermaterial eines von einem offenzelligen oder geschlossenzelligen Schaumstoffmaterial ist.

17. Kindersitz (1) nach einem der vorhergehenden Ansprüche, wobei der Sitz (1) einen eigenen Gurt zum Zurückhalten des Insassens aufweist.

18. Kindersitz (1) nach einem der Ansprüche 1 bis 16, wobei der Sitz (1) nicht mit einem eigenen Gurt ausgestattet ist, wie zum Beispiel im Fall einer Kindersitzerhöhung.

## Revendications

1. Siège de sécurité pour enfant (1) comprenant un corps de siège (2) comprenant une partie de base (4), une partie arrière (6) et un appui-tête (8), dont la position peut être réglée vers le haut ou vers le bas par rapport à la partie arrière (6), le siège de sécurité pour enfant (1) étant **caractérisé en ce qu'**il comprend un élément absorbant l'énergie d'impact (30) en fonction de l'appui-tête (8) et dirigé vers l'extérieur à partir de l'appui-tête (8) et à distance de la tête de l'occupant du siège pour absorber et/ou rediriger des coups incidents sur au moins l'appui-tête (8) du siège (1), ou autour de celui-ci.

2. Siège de sécurité pour enfant (1) selon la revendication 1, dans lequel l'appui-tête (8) comprend une partie arrière (20) destinée à s'étendre derrière la tête de l'occupant du siège, et une aile latérale (22) s'étendant vers l'avant à partir de ladite partie arrière (20) et le long de la tête de l'occupant du siège, dans lequel l'élément absorbant l'impact (30) dépend de l'aile latérale (22) et est dirigé vers l'extérieur de l'aile latérale (22) et à distance de la tête de l'occupant du siège.

3. Siège de sécurité pour enfant (1) selon la revendication 2, dans lequel l'appui-tête (8) comprend une paire d'ailes latérales (22), et un élément absorbant l'impact (30) en fonction de chaque aile latérale (22), chaque élément absorbant l'impact (30) étant dirigé vers l'extérieur à partir de son aile latérale respective (22) et à distance de la tête de l'occupant du siège.

4. Siège de sécurité pour enfant (1) selon l'une quelconque des revendications précédentes, dans lequel l'appui-tête (8) s'étend au-dessus de la partie arrière (6) du siège (1).

5. Siège de sécurité pour enfant (1) selon l'une quelconque des revendications 1 à 3, dans lequel l'appui-tête (8) se déplace le long de la partie arrière (6) du siège (1).

6. Siège de sécurité pour enfant (1) selon l'une quelconque des revendications précédentes, dans lequel l'appui-tête (8) est porté par une première partie arrière (207), et la première partie arrière (207) est réglable vers le haut et vers le bas par rapport à une seconde partie arrière (206).

7. Siège de sécurité pour enfant (1) selon l'une quelconque des revendications précédentes, dans lequel l'appui-tête comprend en outre un moyen d'amortissement dirigé vers la tête de l'occupant du siège de sorte que le moyen d'amortissement est situé entre la tête de l'occupant du siège et l'élément absorbant l'énergie d'impact (30).

8. Siège de sécurité pour enfant (1) selon la revendication 7, dans lequel le moyen d'amortissement est fixé à un côté interne de l'aile latérale ou de chacune des ailes latérales (22).

9. Siège de sécurité pour enfant (1) selon l'une quelconque des revendications précédentes, dans lequel l'élément ou chaque élément absorbant l'impact (30) est adapté pour absorber l'impact grâce à n'importe lequel parmi un ou plusieurs éléments de déformation, d'amortissement, d'écrasement, de rupture, de dégonflage ou d'éclatement plastiquement ou élastiquement.

10. Siège de sécurité pour enfant (1) selon l'une quelconque des revendications précédentes, dans lequel l'élément ou chaque élément absorbant l'impact (30) comprend n'importe lequel parmi un ou plusieurs éléments de creux et/ou de gaz, de liquide, de gel ou une autre coque (32) remplie de matériau absorbant l'énergie (38) d'un matériau cellulaire ou déformable.

11. Siège de sécurité pour enfant (1) selon la revendication 10, dans lequel la coque (32) présente une paroi fine d'un matériau polymère.

12. Siège de sécurité pour enfant (1) selon l'une quelconque des revendications 1 à 9, dans lequel l'élément ou chaque élément absorbant l'énergie d'impact (30) comprend un matériau de rembourrage recouvert d'un matériau de recouvrement pliable.

13. Siège de sécurité pour enfant (1) selon la revendication 12, dans lequel le matériau de recouvrement pliable encapsule le matériau de rembourrage.

14. Siège de sécurité pour enfant (1) selon la revendication 12 ou 13, dans lequel le matériau de recouvrement pliable est un matériau en feuille plastique pliable, et le matériau de rembourrage est un élément de type éponge.

15. Siège de sécurité pour enfant (1) selon l'une quelconque des revendications 12 à 14, dans lequel il existe au moins une ouverture (37) dans le matériau de recouvrement pliable, où cette ouverture (37) permet au moins la libération de l'air à partir de l'élément absorbant l'énergie d'impact.

16. Siège de sécurité pour enfant (1) selon l'une quelconque des revendications 12 à 15, dans lequel le matériau de recouvrement pliable est un sac en PVC, et le matériau de rembourrage est soit un matériau en mousse à cellules ouvertes, soit un matériau en mousse à cellules fermées.

17. Siège de sécurité pour enfant (1) selon l'une quelconque des revendications précédentes, dans lequel le siège (1) comprend son propre harnais permettant de retenir l'occupant.

18. Siège de sécurité pour enfant (1) selon l'une quelconque des revendications 1 à 16, dans lequel le siège (1) n'est pas équipé de son propre harnais, comme dans le cas d'un siège d'appoint.
